# FASCICULE DE BREVET EUROPEEN

(11) **EP 2 027 393 B1**
(45) Date de publication et mention de la délivrance du brevet: **13.10.2010**
(21) Numéro de dépôt: 07717985.1
(22) Date de dépôt: 15.01.2007
(51) Int. Cl.: F16D 21/06, F16D 25/08, F16D 25/10

(54) **COMMANDE INTEGREE POUR DOUBLE EMBRAYAGE**
INTEGRIERTE STEUERUNG FÜR DOPPELKUPPLUNG
INTEGRATED CONTROL FOR DOUBLE CLUTCH

(30) Priorité: 18.01.2006 FR 0600601
(43) Date de publication de la demande: 25.02.2009
(73) Titulaire: Thery, Pascal, 80000 Amiens (FR)
(72) Inventeur: Thery, Pascal, 80000 Amiens (FR)
(86) Numéro de dépôt international: PCT/FR2007/000086
(87) Numéro de publication internationale: WO 2007/083022

(56) Documents cités:
- EP-A2- 1 134 447
- EP-A2- 1 245 863
- EP-A2- 1 361 102
- DE-A1- 3 907 030
- US-A- 6 158 562

## Description

La présente invention concerne une transmission comprenant un double embrayage, en particulier pour véhicule automobile.

Un type de boîte de vitesses automatique connu à double embrayage comporte deux arbres primaires d'entrée liés chacun à l'arbre d'un moteur par un embrayage qui peut fonctionner à sec ou dans l'huile, chaque arbre primaire transmet le mouvement par différents rapports de démultiplication définissant chacun une vitesse, à un ou plusieurs arbres secondaires de la boîte de vitesses liés eux-mêmes en rotation aux roues motrices. Chaque rapport de démultiplication peut être engagé par le crabotage d'un pignon sur son arbre après synchronisation des vitesses de rotation. Ces rapports pris dans l'ordre d'une multiplication de vitesse croissante, sont disposés alternativement sur un arbre primaire et sur l'autre.

Le passage d'un premier à un deuxième rapport est effectué en engageant le deuxième rapport disposé sur le deuxième arbre primaire par un crabotage du pignon correspondant, puis simultanément en fermant le deuxième embrayage et en ouvrant le premier embrayage. Le couple est transféré progressivement du premier au deuxième rapport sans rupture de transmission du couple moteur.

La continuité de transmission du couple permet des changements de vitesse en douceur qui procurent un confort de conduite et des meilleures performances, l'accélération étant maintenue sans interruption.

Les commandes des embrayages et des dispositifs d'engagement des rapports comprennent des actionneurs pilotés par un calculateur disposant d'informations sur le fonctionnement du moteur et du véhicule, et recevant des demandes du conducteur.

La boîte de vitesses à double embrayage peut aussi comporter des liaisons de transfert entre les arbres primaires, comme présenté dans le document W02006/125876.

Un double embrayage de ce type est décrit dans le document EP-A1-0185176 qui présente un volant moteur fixé à un vilebrequin, comportant un plateau central faisant plateau de réaction pour deux disques de friction disposés en appui de part et d'autre, chaque disque étant serré sur son autre face par un plateau de pression mobile suivant l'axe. Deux actionneurs comportant chacun un vérin hydraulique annulaire concentrique exercent par l'intermédiaire d'un roulement et d'un levier annulaire une charge sur chaque plateau de pression.

Un inconvénient principal de ce double embrayage est que le système de commande comporte deux actionneurs disposés d'un même côté par rapport aux embrayages, ce qui le rend complexe, onéreux, et relativement encombrant suivant les directions radiale comme axiale, alors que le double embrayage a déjà un encombrement axial supérieur à celui d'un simple embrayage.

De plus, la liaison entre un vérin de commande placé du côté de la boîte de vitesses et le plateau de pression de l'embrayage placé du côté du moteur est complexe car nécessitant une liaison traversant l'autre embrayage pour assurer la transmission de l'effort axial. Ceci impose l'utilisation de pièces de liaison qui augmentent la complexité, le coût et l'encombrement. En outre, ces pièces de liaison se déforment lors de la transmission d'un effort ce qui ajoute une certaine élasticité dans la commande et réduit la course disponible pour le mouvement axial du plateau de pression.

Pour résoudre ce problème, un autre type d'embrayage connu est décrit dans le document EP-A3-1245863 présentant un vérin hydraulique axialement aligné sur les embrayages et placé à l'extrémité arrière de la boîte du côté opposé au moteur, pour actionner grâce à une tige coulissante dans les arbres primaires l'embrayage situé du côté du moteur.

Ce vérin comprend un tube assurant le guidage d'un piston coulissant pour former une chambre recevant la pression hydraulique. Un bossage du carter de la boîte de vitesses comporte un alésage dans lequel le tube vient s'ajuster, il possède une paroi épaisse recouvrant la majeur partie du tube pour le maintenir en position. Pour limiter la longueur axiale de la boîte de vitesses, le bossage contenant le tube pénètre dans un logement formé dans l'extrémité d'un arbre primaire.

Un inconvénient de ce dispositif est que son encombrement radial important oblige à prévoir un plus grand diamètre pour l'extrémité de l'arbre primaire contenant le bossage, pour le roulement supportant cette extrémité ainsi que pour les pignons attachés. L'encombrement, le poids et le coût sont plus élevés, la distance entre les arbres peut aussi être plus importante.

La présente invention a notamment pour but d'éviter ces inconvénients et d'apporter une solution compacte, simple, efficace et économique à la réalisation d'une commande d'un double embrayage intégrée dans un arbre.

Elle propose à cet effet une transmission comprenant un double embrayage transmettant le couple d'un moteur à deux arbres primaires d'entrée d'une boîte de vitesses, chaque embrayage comportant au moins un disque de friction lié en rotation à un des arbres primaires, qui peut être serré entre des plateaux dont l'un est mobile axialement sous l'effet d'une commande, une de ces commandes comportant un piston guidé par une surface cylindrique intégrée dans un logement axial d'un arbre primaire, **caractérisé en ce que** la surface cylindrique de guidage se trouve au plus près du logement de l'arbre, cette surface étant réalisée directement dans le logement de l'arbre ou dans un corps inséré dans le logement dont l'extrémité est liée au carter de la boîte de vitesses par une fixation reportée en dehors du logement.

La surface cylindrique de guidage de la commande intégrée ne comportant pas de moyen de fixation qui viendrait s'interposer radialement entre cette surface et le logement, ce logement a un encombrement radial réduit ce qui permet de limiter le diamètre extérieur de l'arbre primaire le contenant.

Avantageusement, la surface de guidage étant réalisée dans un corps inséré dans le logement, ce corps comprend une partie cylindrique pour le coulissement du piston et une extrémité évasée formant une collerette d'un diamètre supérieure à la partie cylindrique pour la fixation sur le carter qui est située en dehors du logement de l'arbre primaire.

La collerette peut comporter pour la fixation sur le carter une face radiale plane assurant la perpendicularité, une partie cylindrique assurant le centrage et une face d'appui pour un joint d'étanchéité.

Suivant une variante dans laquelle le piston délimite une chambre de pression hydraulique, un disque de fermeture fermant la chambre de pression peut être fixé de manière étanche sur le carter, ce disque de fermeture pouvant être serti sur le carter.

Avantageusement, un moyen d'étanchéité entre le carter et l'arbre primaire ferme une chambre complémentaire entourant le corps, cette chambre étant alimentée en huile par un conduit.

Suivant une variante dans laquelle le piston est poussé par un moyen mécanique, une étanchéité est prévue entre le piston et le corps.

Le moyen mécanique de poussé peut être une tige venant pousser au fond d'un creux axial formé dans le piston, ce creux s'étendant axialement sur une majeure partie de la surface de guidage du piston.

De préférence un levier articulé sur le carter et transmettant une force venant d'un actionneur prend appui sur le moyen mécanique.

Suivante une variante le corps est obtenu par un procédé de filage au choc d'une pastille d'aluminium, ce corps pouvant être fixé au carter par sertissage.

Suivant une autre variante le corps est obtenu par moulage d'une matière plastique, ce corps pouvant être fixé au carter par un clipsage.

Dans le cas où la surface de guidage est réalisée directement dans le logement de l'arbre, le piston coulisse dans un alésage formé par ce logement et délimite une chambre de pression hydraulique.

Un joint d'étanchéité dynamique peut assurer l'étanchéité de la chambre de pression entre l'arbre primaire et le carter, une pièce de support pouvant servir de liaison entre le joint d'étanchéité dynamique et le carter.

L'alésage de l'arbre primaire peut comporter un moyen de fermeture pour l'appui d'un ressort.

Suivant un mode de réalisation, le piston est moulé en matière plastique.

Suivant une combinaison particulièrement avantageuse, l'embrayage commandé par le piston ne comporte pas de dispositif interne de rattrapage d'usure des disques de friction.

L'invention sera mieux comprise et d'autres caractéristiques et avantages apparaîtront plus clairement à la lecture de la description ci-après donnée à titre d'exemple en référence aux dessins annexés dans lesquels :
- la figure 1 représente un schéma partiel d'une transmission selon l'invention ;
- la figure 2 représente un schéma partiel comportant un double embrayage suivant une variante ;
- la figure 3 représente une vue détaillée en coupe d'un double embrayage avec ses commandes ;
- la figure 4 représente une vue détaillée en coupe avec une commande selon une première variante ;
- la figure 5 représente une vue détaillée en coupe avec une commande selon une deuxième variante ;
- la figure 6 représente une vue détaillée en coupe avec une commande selon une troisième variante ;
- la figure 7 représente une vue détaillée en coupe avec une commande selon une quatrième variante.

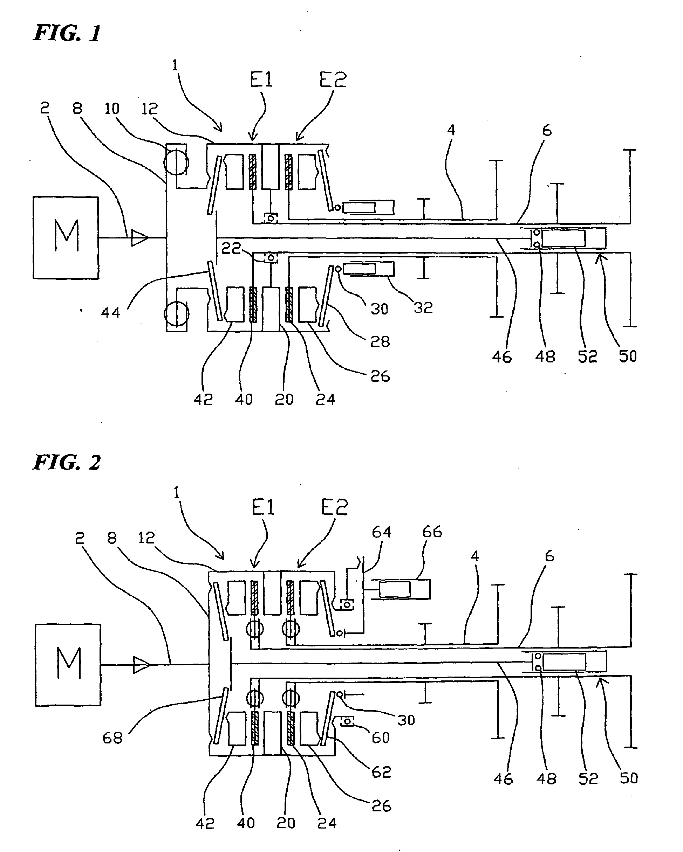

La figure 1 représente une transmission comportant un double embrayage 1 reliant l'arbre 2 d'un moteur aux arbres primaires 4, 6 concentriques d'entrée d'une boîte de vitesses, chaque arbre comporte des pignons pouvant réaliser différents rapports de démultiplication pour l'entraînement des roues motrices d'un véhicule. L'arbre primaire extérieur 4 est creux, il contient l'arbre primaire intérieur 6 qui le traverse de part en part.

Un volant moteur primaire 8 qui peut disposer d'une flexibilité axiale pour amortir des oscillations en flexion de l'arbre du moteur 2, est fixé en bout de cet arbre, il entraîne par des ressorts 10 ayant une action circonférentielle un volant secondaire 12 formé par la partie entraînante du double embrayage 1, de manière à constituer un double volant pour l'amortissement des vibrations en torsion.

Le volant secondaire 12 comporte un plateau central 20 centré et maintenu axialement par un roulement 22 qui est fixé sur une extrémité de l'arbre primaire extérieur 4. Ce plateau central 20 sert de plateau de réaction pour deux disques de friction 24, 40 disposés axialement de part et d'autre. Au repos, les deux disques ne sont pas serrés, ils forment deux embrayages ouverts.

Un premier disque 24 placé du côté de la boîte de vitesses est lié en rotation à l'arbre primaire extérieur 4, ce premier embrayage peut être fermé par le serrage d'un plateau de pression 26 lié en rotation au volant secondaire 12, et déplacé par une première commande comportant un levier annulaire 28, une butée axiale 30 et un vérin hydraulique annulaire 32 fixé sur le carter de la boîte de vitesses. L'avance du piston du vérin 32 en direction du moteur déplace le levier 28 qui en prenant appui par sa périphérie extérieure sur le volant 12, exerce une force de serrage sur le plateau 26 avec une certaine démultiplication de l'effort dépendant de la distance entre les points d'appui constituant des bras de levier.

Un deuxième disque 40 placé du côté du moteur est lié en rotation à l'arbre primaire intérieur 6, ce deuxième embrayage peut être fermé par le serrage d'un plateau de pression 42 lié en rotation au volant secondaire 12 et déplacé par une deuxième commande. Cette deuxième commande comporte un levier annulaire 44, un vérin hydraulique 50 placé suivant l'axe de l'embrayage et intégré à l'intérieur de l'arbre primaire intérieur creux 6, et un piston 52 tourné vers le moteur qui actionne par le moyen d'une butée axiale 48 une tige de commande 46 dont l'autre extrémité est en appui sur une partie centrale du levier annulaire 44. Ce levier prend appui sur le volant secondaire 12 en une zone radialement intermédiaire pour exercer à sa périphérie extérieure une force de serrage sur le plateau 42 avec une certaine démultiplication de l'effort dépendant de la longueur des bras de levier.

La figure 2 représente une variante de la transmission de la figure 1, l'arbre moteur 2 est directement lié au volant secondaire 12 par une liaison rigide en rotation qui peut disposer d'une flexibilité axiale. Les disques de friction 24, 40 disposent de ressorts dans le moyeu ayant une action circonférentielle pour réaliser l'amortissement des vibrations en torsion.

Le centrage et le maintien axial du volant secondaire 12 est différent, il comporte un palier 60 qui relie le côté du volant 12 tourné vers la boîte de vitesses au carter de cette boîte.

Les deux embrayages sont fermés au repos, les disques de friction 24, 40 étant serrés par les leviers 62, 68 constituant des ressorts du type diaphragme exerçant au repos une charge axiale sur les plateaux de pression 26, 42.

La commande du premier embrayage diffère de celle de la figure 1, un vérin hydraulique 66 est monté à l'extérieur du carter de la boîte de vitesses, l'effort qu'il exerce pour débrayer est transmis par une fourchette 64 qui pivote en prenant appui sur le carter, puis par la butée axiale 30 au diaphragme 62. La commande du deuxième embrayage reste similaire, le vérin hydraulique 50 exerce un effort par l'intermédiaire de la butée axiale 48 et de la tige de commande 46 sur des doigts radiaux du diaphragme 68 pour réaliser le débrayage.

D'une manière générale et dans le cadre de l'invention, les variantes des figures 1 et 2 peuvent être combinées entre elles pour obtenir différentes caractéristiques de fonctionnement ou d'encombrement.

La disposition du vérin hydraulique 50 du deuxième embrayage à l'intérieur du deuxième arbre primaire 6, avec une fixation non représentée reportée à l'extérieur, apporte un certain nombre d'avantages, elle permet notamment d'implanter entre le double embrayage 1 et la boîte de vitesses, une seule commande 32, 64, qui dispose d'une longueur axiale réduite par rapport à une double commande. De plus les dispositifs utilisés, vérin annulaire 32 ou fourchette 64 sont similaires à ceux des boîtes de vitesses du type à commande manuelle n'utilisant qu'un seul actionneur, ce qui permet d'utiliser des technologies standards. La commande du deuxième embrayage comportant le vérin 50 n'ajoute pratiquement pas de longueur supplémentaire à la boîte de vitesses dans la mesure où il est intégré dans l'arbre primaire 6. De plus, comprenant un vérin plein sans passage intérieur, sa réalisation est simple et économique et ses frottements sont réduits ce qui améliore la précision et le rendement. Par ailleurs le diamètre de l'arbre reste limité.

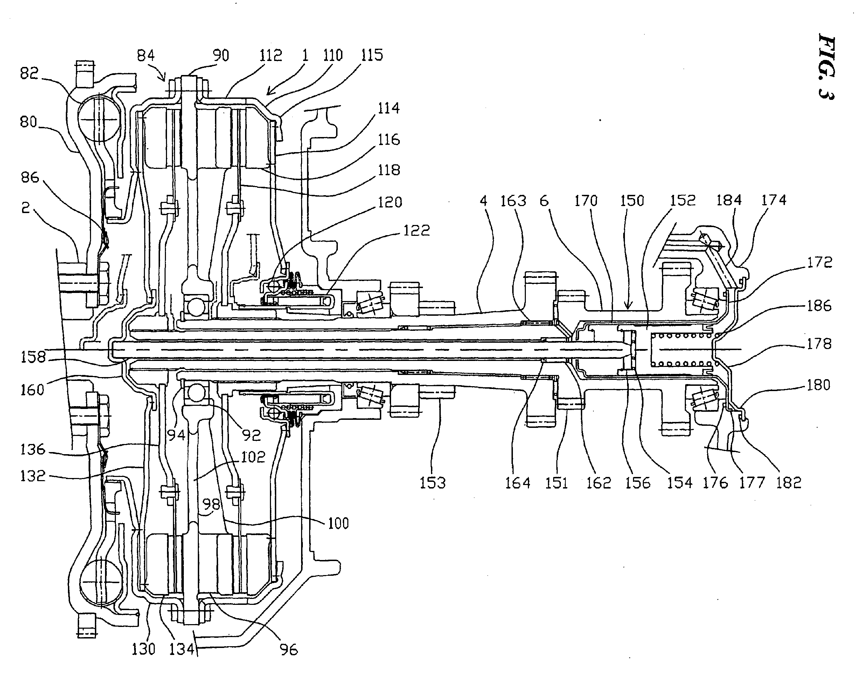

La figure 3 représente un double embrayage 1 réalisé suivant le schéma de la figure 1. Un volant primaire 80 fixé en bout d'un vilebrequin 2 d'un moteur thermique entraîne par des ressorts longs 82 disposés circonférentiellement un volant secondaire 84 contenant le double embrayage. Un dispositif de freinage 86 permet avec les ressorts 82 d'amortir les oscillations entre les deux volants et de filtrer les vibrations.

Le mouvement venant des ressorts 82 est transmis par un couvercle 130 à un plateau central 90 qui est supporté et maintenu axialement par un roulement à billes 92 fixé à une extrémité du premier arbre primaire 4, et maintenu en position par un jonc ouvert 94 placé dans une rainure de l'arbre. Le plateau central 90 a une partie radialement extérieure plus épaisse comportant deux faces transversales circulaires de frottement pour les disques de friction 118, 136. Dans une partie axialement médiane entre ces faces se trouvent une succession de canaux radiaux 96 régulièrement espacés suivant la circonférence et débouchant aux extrémités, réalisant avec la rotation une ventilation interne d'air forcé refroidissant le plateau central 90 qui par ailleurs reçoit une énergie calorifique sur ses faces de frottement.

Le plateau central 90 comporte une partie de liaison en forme de disque 98 sensiblement plat reliant le roulement 92 à la partie du plateau recevant la face de frottement tournée vers le moteur. Des nervures 100 parallèles à l'axe de rotation relient le support du roulement 92 à la partie plus épaisse du plateau central 90, elles sont situées entre deux canaux radiaux 96 pour dégager le passage d'air, elles contribuent par un entraînement de l'air en rotation au débit d'air dans les canaux 96. De plus, des ouvertures 102 sont pratiquées entre les nervures 100 dans le disque de liaison 98 pour l'alléger.

La fixation directe du plateau central 90 sur un arbre primaire de la boîte de vitesses par le roulement 92 ainsi que les nervures 100 apportent un positionnement précis et une rigidité axiale importante à la partie comportant les faces de frottement qui reçoit des charges axiales venant des commandes. Ceci permet de réduire les pertes de levée des plateaux de pression 116, 134 dues aux déformations élastiques, et ainsi de réduire les courses des actionneurs et d'augmenter la précision de pilotage des embrayages. De plus, les commandes des embrayages ne transmettent pas d'efforts axiaux sur l'arbre du moteur 2, ces efforts étant repris directement dans la boîte de vitesses par le roulement 92.

Un premier couvercle 110 est fixé au plateau central 90 du côté tourné vers la boîte de vitesses, sa partie la plus éloignée du plateau comporte un rebord 115 de centrage et de retenu axiale d'un levier annulaire 114. Entre le plateau central 90 et ce rebord 115 se trouvent des ouvertures 112 permettant la sortie de l'air venant des canaux 96. Le plateau de pression 116 placé dans le couvercle 110 est guidé axialement et entraîné en rotation par des languettes orientées tangentiellement non représentées ici.

Un vérin annulaire creux 122 entoure l'arbre primaire extérieur 4, son piston agit par l'intermédiaire du roulement 120 sur le levier 114 qui, en prenant appui sur le rebord 115 du couvercle 110, presse en une zone radialement à l'intérieur du rebord 115 le plateau de pression 116 et les garnitures du disque de friction 118.

Le deuxième couvercle 130 est fixé sur l'autre face du plateau central 90, il assure le guidage et l'entraînement du deuxième plateau de pression 134, un centrage d'un levier annulaire 132 ainsi qu'un appui axial du levier dans une zone située radialement à l'intérieur de la zone d'appui du levier sur ce plateau de pression.

On notera que le centrage de chaque levier annulaire 114, 132, est réalisé directement par les couvercles 110, 130, sans utiliser de pièces complémentaires de centrage, ce qui permet de disposer d'un faible encombrement axial pour l'ensemble, de simplifier la fabrication et de réduire les coûts.

La commande de ce deuxième embrayage comporte un vérin hydraulique 150 axialement aligné et placé dans un logement cylindrique réalisé à l'extrémité de l'arbre primaire intérieur 6. Par ailleurs, cet arbre supporte des pignons d'entraînement dont le plus petit 151 a un diamètre supérieur au plus petit des pignons 153 de l'autre arbre primaire 4, pour faciliter l'implantation du vérin.

Le piston 152 du vérin 150 agit par l'intermédiaire d'une butée axiale à aiguilles 154 et d'une plaque d'appui 156 sur une tige de commande 158. Un disque de poussée 160 d'une part est centré sur le levier annulaire 132, et d'autre part centre l'extrémité de la tige de commande 158 tournée vers le moteur, il transmet l'effort axial venant du piston 152 au levier 132.

Par ailleurs, la tige de commande 158 est centrée à proximité du vérin 150 par un palier lisse 162 fixé dans l'arbre primaire intérieur 6. Un joint annulaire d'étanchéité 164 est placé à côté de ce palier du côté du moteur, de cette manière, tous les paliers de cette commande, palier de centrage 162 et butée axiale 154, sont dans l'huile de lubrification de la boîte de vitesses ce qui est favorable. En variante, un deuxième palier lisse fixé dans l'arbre primaire 6 peut centrer la tige de commande 152 du côté du moteur, le disque de poussée 160 n'étant alors pas centré sur le levier annulaire 132.

On notera que pour chaque extrémité de la tige de commande 158 il y a un seul centrage ce qui permet un montage sans contrainte inutile pouvant générer des usures, et une fabrication simple.

L'extrémité de la tige 158 en contact avec la plaque d'appui 156 a une forme conique avec un angle assez faible, qui s'ajuste dans une forme correspondante de la plaque. Ce cône d'une part facilite le montage de la tige lorsqu'elle est introduite par le côté du moteur, et d'autre part permet d'augmenter le couple d'entraînement par frottement sous l'effet d'une charge axiale entre cette tige 158 et la plaque d'appui 156 pour éviter d'avoir un glissement.

Le corps 170 du vérin 150 a globalement une forme de révolution comprenant une partie cylindrique centrale pour le coulissement du piston 152, l'extrémité tournée vers le moteur ou extrémité avant est resserrée pour lui donner de la rigidité, l'extrémité arrière située en dehors du logement de l'arbre primaire 6 est évasée et comprend une collerette radiale 172 qui vient en appui sur le carter 174 de la boîte de vitesses par l'intermédiaire d'un joint annulaire d'étanchéité 176, une partie cylindrique radialement extérieure 177 assure le centrage.

La fixation du corps 170 sur le carter 174 par une collerette de forme évasée a pour avantage d'apporter à cette fixation une rigidité plus grande ainsi qu'une meilleure précision de positionnement du corps, notamment sa perpendicularité, ce qui permet de réduire le jeu entre le corps et le logement.

Avantageusement, le corps 170 est formé par un procédé de filage au choc d'une pastille d'aluminium qui permet d'obtenir des parois fines et de bonne qualité pour le frottement du piston 152, ainsi que pour l'étanchéité qui est réalisée par un joint à lèvre fixé sur le piston.

Un disque de fermeture 178 ferme la chambre de pression hydraulique, il comporte un centrage 180 comprenant radialement à l'extérieur une face d'appui sur le carter 174 par l'intermédiaire d'un joint annulaire d'étanchéité 182, sa périphérie est fixée au carter par un sertissage. Le disque 178 comporte radialement à l'intérieur du centrage 180 une succession de bossages axiaux répartis angulairement qui pressent sur la collerette radiale 172 du corps 170 pour assurer sa position et son étanchéité, l'espace entre ces bossages forme un passage radial pour la pression hydraulique qui vient d'un conduit 184 réalisé dans le carter 174.

Par ailleurs, le disque de fermeture 178 comporte un bossage central réalisant le centrage et l'appui d'un ressort 186 qui assure une précharge sur le piston 152 pour maintenir en permanence une charge axiale entre les différentes pièces de la commande, du piston 152 au levier 132, et éviter des glissements. Toutefois cette précharge du ressort 186, additionné éventuellement d'une précharge venant du levier annulaire 132, est inférieure à la charge des languettes d'entraînement du plateau de pression 134 qui réalisent la levée de ce plateau quand la pression hydraulique est faible ou nulle dans le vérin 150.

Le montage du vérin 150 est simple, on insère successivement par l'arrière dans le carter 174 le corps 170 avec son piston 152, le ressort 186, puis la tôle de fermeture 178 qui est sertie.

Pour le montage du double embrayage, on met en place le plateau central 90 équipé du roulement 92 et du premier disque de friction 118 maintenu par le couvercle 110, sur l'arbre primaire extérieur 4 de la boîte de vitesses. Le jonc ouvert 94 est monté pour maintenir le roulement 92, puis le couvercle 130 est fixé sur le plateau central 90 après mise en place du deuxième disque de friction 136 sur l'arbre primaire intérieur 6.

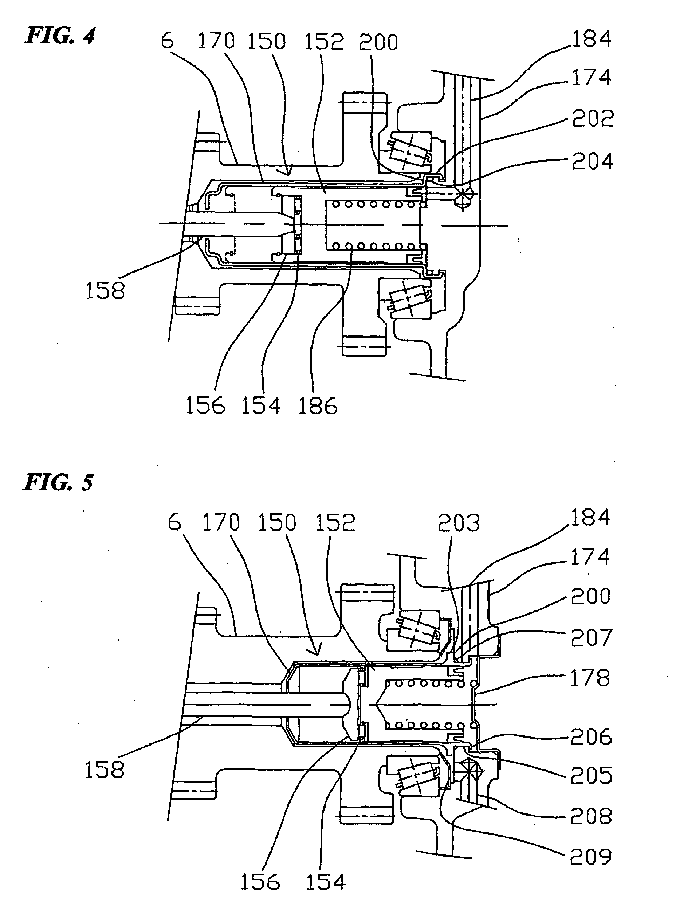

La figure 4 représente une variante de montage du vérin 150. Le corps 170 comporte à son extrémité arrière, en dehors du logement de l'arbre primaire 6, successivement une face radiale d'appui 200 sur le carter 174, une partie cylindrique 202 de centrage qui enserre un joint annulaire d'étanchéité 204, puis une zone de sertissage du corps 170 repliée vers l'axe dans une gorge circulaire du carter. Le montage du vérin 150 équipé de ses composants dans le carter se fait par l'avant, puis le corps 170 est serti. En variante, la partie cylindrique 202 de centrage pourrait être insérée radialement à l'intérieur d'un alésage du carter 174.

La figure 5 représente une variante de montage du vérin 150. La partie arrière du corps 170 située en dehors du logement de l'arbre primaire 6, comporte une collerette comprenant un rebord avant 203 avec une face radiale d'appui 200 assurant la perpendicularité du corps 170, et un rebord arrière 206 réalisé par un sertissage du corps qui est de préférence en aluminium. Ces rebords délimitent une gorge radiale 205 réalisant un centrage après assemblage dans un alésage du carter 174. Un chanfrein 207 réalisé sur la partie avant de l'alésage du carter vient comprimer un joint torique placé dans la gorge 205 pour réaliser l'étanchéité.

Sur les figures 3, 4 et 5, un passage axial d'huile est possible entre le corps du vérin 170 et le logement de l'arbre primaire intérieur 6, pour venir notamment lubrifier les paliers 162, 163 situés dans les arbres primaires 4, 6. La figure 5 présente un conduit d'alimentation en huile 208 percé dans le carter 174, et débouchant dans une cavité fermée par un déflecteur 209 qui a un appui axial élastique sur l'extrémité de l'arbre primaire 6.

On notera que l'encombrement radial du vérin 150 est faible grâce aux parois minces du corps 170 ajustées avec un jeu réduit, de l'ordre de 1 millimètre, dans le logement cylindrique de l'arbre, ce jeu réduit étant possible grâce à la fixation du corps 170 qui assure une bonne perpendicularité. Les surfaces de guidage du piston 152 sont au plus près du logement de l'arbre primaire 6, la fixation du corps étant reportée entièrement à l'extérieur de cet arbre, ce qui permet de réaliser un arbre de diamètre réduit.

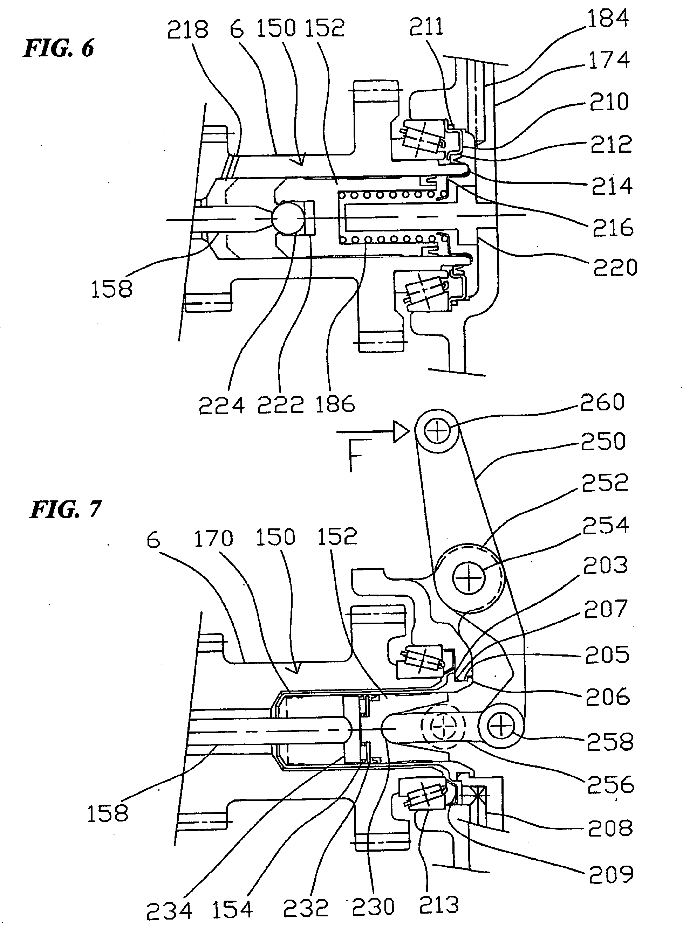

La figure 6 présente un piston 152 qui coulisse avec étanchéité dans un alésage axial formant la chambre du vérin 150, réalisé directement dans l'arbre primaire intérieur 6 et constituant le logement cylindrique. La chambre hydraulique sous pression alimentée par le conduit 184 est fermée par une rondelle de support 210 montée dans le carter 174 avec un joint d'étanchéité 211 interposé. Cette rondelle, maintenue par un roulement 213 de l'arbre primaire intérieur 6, supporte un joint d'étanchéité dynamique 212 en contact avec une partie cylindrique extérieure située en bout de cet arbre.

Une tôle 214 serrée dans l'arbre primaire intérieur 6 vient fermer l'entrée de l'alésage de la chambre du vérin 150, elle sert de centrage et d'appui pour l'extrémité du ressort 186. Des ouvertures 216 se trouvent sur une partie périphérique de cette tôle pour réaliser l'alimentation en huile du vérin en un point haut permettant une purge de l'air. L'autre extrémité de l'alésage de l'arbre primaire comporte un perçage 218 faisant communiquer cet alésage avec le carter de la boîte de vitesses pour permettre un passage de l'air lors des mouvements du piston 152.

Un capteur de déplacement 220 du piston 152 est installé à l'intérieur de la chambre, dans le piston, la fixation ainsi que la sortie des fils électriques prennent appui sur le carter 174. Ce capteur fourni des informations au calculateur de contrôle de la boîte de vitesses sur la position du piston 152, pour permettre un contrôle précis de l'embrayage.

La figure 6 présente pour l'appui sur la tige 158, une butée de piston 152 simplifiée, comprenant une plaque d'appui 222 en acier traité et une bille 224 ajustées dans un logement borgne du piston et maintenues en position par un sertissage, le frottement se faisant dans l'huile sur des surfaces traitées et proches de l'axe. Cette butée simplifiée peut s'utiliser plus facilement dans le cas du vérin 150 réalisé directement dans l'arbre primaire 6 car la vitesse de rotation de la butée axiale du piston 152 est réduite ou nulle suivant que la transmission fonctionne avec un embrayage ou l'autre.

La variante présentée figure 6 permet de réduire le nombre de pièce ainsi que l'encombrement du vérin hydraulique 150. De plus, un préassemblage des composants du vérin 150 dans l'arbre est possible, ce qui simplifie le montage.

Le logement de l'arbre primaire 6 ne contient pas de moyen de fixation de la surface cylindrique de guidage, cette surface étant réalisée directement dans l'arbre. L'encombrement radial du vérin est réduit ce qui permet de disposer sur cet arbre des pignons et un roulement de diamètre faible.

On notera que l'installation d'un vérin 150 de commande dans la boîte de vitesses apporte un avantage dans le cas d'un léger débit de fuite du vérin, l'huile restant dans le carter de la boîte de vitesses.

D'une manière générale, la pression hydraulique nécessaire pour les actionneurs peut être générée de différentes manières, elle peut provenir d'une pompe mécanique entraînée par le moteur thermique ou d'une pompe électrique, elle peut utiliser l'huile de lubrification de la boîte de vitesses ou une huile spécifique, le circuit peut être ouvert avec des électrovannes de commande, ou fermé avec pour chaque actionneur un vérin hydraulique émetteur qui commande le déplacement d'un volume défini d'huile.

La figure 7 présente une commande pour un actionneur déporté sur le côté de la boîte de vitesses et agissant sur un levier 250, cet actionneur peut être hydraulique ou électromécanique,

Le vérin 150 comporte un piston 152 avec un joint d'étanchéité, coulissant dans un corps 170 comprenant une surface cylindrique de guidage interne. Le piston 152 presse par une rondelle traitée 232 sur une butée à aiguilles 154 qui transmet l'effort à la tige de commande 158 par une plaque d'appui 234. L'extrémité de la tige 156 sphérique est emboîtée dans un logement correspondant réalisé sur la plaque d'appui 234, pour réaliser une liaison du type rotule permettant de rattraper un défaut d'alignement.

La partie arrière du corps 170 située en dehors du logement de l'arbre primaire 6, comporte une collerette comprenant une gorge radiale 205 entre un rebord avant 203 et un rebord arrière 206, pour l'assemblage dans un alésage du carter 174 comportant un chanfrein 207 pour comprimer un joint torique.

On notera que le diamètre extérieur du piston 152 est supérieur à celui de la butée axiale 154, ce qui permet d'intégrer cette butée dans le prolongement du piston.

Le corps 170 peut être réalisé en aluminium, le rebord arrière 206 étant alors serti après assemblage. Il peut aussi être réalisé en matière plastique moulée, un chanfrein d'entrée 207 venant aider pour l'insertion du rebord arrière 206 dans l'alésage, ce rebord venant ensuite se clipser en arrière du carter pour maintenir le corps en position. La matière plastique est d'autant mieux appropriée pour le corps du vérin 170 que ce composant ne contient pas d'huile sous pression, il constitue seulement une surface de guidage avec une étanchéité pour le piston, l'huile de la boîte étant sensiblement à la pression atmosphérique.

Avantageusement le piston 152 est réalisé en matière plastique moulée, le joint d'étanchéité pouvant directement être surmoulé, ce qui représente un procédé économique.

Le levier 250 comprend un perçage pour le guidage par un axe 254, les extrémités de cet axe sont supportées par deux bossages 252 du carter 174 de la boîte de vitesses qui encadrent le levier. La partie supérieure du levier reçoit la force F exercée par l'actionneur par une liaison pivotante 260, la partie inférieure transmet la force à une tige 256 par une liaison pivotante 258. L'autre extrémité de cette tige a une forme sphérique qui s'engage dans une forme correspondante 230 du piston réalisée au fond d'un creux axial de forme conique, ce creux s'étendant axialement sur une majeure partie de la surface de guidage du piston 152 sur le corps 170, ce qui permet de réduire l'encombrement.

Le levier 250 peut être réalisé en métal moulé ou forgé, ou en tôle découpée et emboutie. Avantageusement, l'axe de guidage 254 et les liaisons pivotantes 258, 260 réalisant un angle de débattement assez important, comportent des bagues de frottement pour réduire le frottement et l'hystérésis de la commande ce qui permet d'améliorer la précision de contrôle de l'embrayage.

De préférence, on prévoit comme pour les variantes précédentes un ressort de précharge qui assure une précharge axiale sur le piston 152, ce ressort peut être intégré soit dans l'arbre primaire 6, soit au niveau du levier 250, ou soit dans l'actionneur extérieur.

D'une manière générale, les embrayages peuvent travailler à sec ou dans l'huile, ils peuvent être au repos ouverts ou fermés.

Un intérêt notable de la commande intégrée dans l'arbre primaire intérieur 6 suivant l'invention est que le diamètre du logement dans l'arbre primaire 6 étant limité, cette commande peut d'autant plus facilement s'étendre sur une longueur axiale relativement importante sans être gênée par les composants environnants et sans diminuer de manière importante la tenue mécanique de l'arbre. Une course assez élevée du piston permet de s'adapter alors facilement à un embrayage ne disposant pas d'un dispositif interne de rattrapage d'usure du disque de friction qui a pour objectif de réduire la course de la commande. L'embrayage est plus simple à réaliser tout en étant moins onéreux.

## Revendications

1. Transmission comprenant un double embrayage transmettant le couple d'un moteur à deux arbres primaires (4, 6) d'entrée d'une boîte de vitesses, chaque embrayage comportant au moins un disque de friction (24, 40, 118, 136) lié en rotation à un des arbres primaires, qui peut être serré entre des plateaux dont l'un (26, 42, 116, 134) est mobile axialement sous l'effet d'une commande, une de ces commandes comportant un piston (52, 152) guidé par une surface cylindrique intégrée dans un logement axial d'un arbre primaire (6), **caractérisée en ce que** la surface cylindrique de guidage se trouve au plus près du logement de l'arbre, cette surface étant réalisée directement dans le logement de l'arbre ou dans un corps (170) inséré dans le logement dont l'extrémité est liée au carter (174) de la boîte de vitesses par une fixation reportée en dehors du logement.

2. Transmission selon la revendication 1, la surface de guidage étant réalisée dans un corps inséré dans le logement, **caractérisée en ce que** le corps comprend une partie cylindrique pour le coulissement du piston (52, 152), et une extrémité évasée formant une collerette d'un diamètre supérieure à la partie cylindrique, située en dehors du logement de l'arbre primaire (6) pour la fixation sur le carter (174).

3. Transmission selon la revendication 2, **caractérisée en ce que** la collerette comporte pour la fixation sur le carter (174) une face radiale plane (200) assurant la perpendicularité, une partie cylindrique (202, 205) assurant le centrage et une face d'appui pour un joint d'étanchéité.

4. Transmission selon la revendication 2, **caractérisée en ce que** le piston (152) délimite une chambre de pression hydraulique, et **en ce que** un disque de fermeture (178) fermant la chambre de pression est fixé de manière étanche sur le carter (174), ce disque de fermeture (178) pouvant être serti sur le carter (174).

5. Transmission selon la revendication 2, **caractérisée en ce que** un moyen d'étanchéité (209) entre le carter (174) et l'arbre primaire (6) ferme une chambre complémentaire entourant le corps (170), cette chambre étant alimentée en huile par un conduit (208).

6. Transmission selon la revendication 2, **caractérisée en ce que** le piston (152) est poussé par un moyen mécanique (256), une étanchéité étant prévue entre le piston et le corps (170).

7. Transmission selon la revendication 6, **caractérisée en ce que** le moyen mécanique de poussé est une tige (256) venant pousser au fond d'un creux axial formé dans le piston (152), ce creux s'étendant axialement sur une majeure partie de la surface de guidage du piston.

8. Transmission selon la revendication 6, **caractérisée en ce qu'**un levier (250) articulé sur le carter (174) et transmettant une force venant d'un actionneur, prend appui sur le moyen mécanique (256),

9. Transmission selon la revendication 2, **caractérisée en ce que** le corps (170) est obtenu par un procédé de filage au choc d'une pastille d'aluminium, ce corps pouvant être fixé au carter (174) par sertissage (206).

10. Transmission selon la revendication 2, **caractérisée en ce que** le corps (170) est obtenu par moulage d'une matière plastique, ce corps pouvant être fixé au carter (174) par un clipsage (206).

11. Transmission selon la revendication 1, la surface de guidage étant réalisée directement dans un logement de l'arbre, **caractérisée en ce que** le piston (152) coulisse dans un alésage formé par ce logement et délimite une chambre de pression hydraulique.

12. Transmission selon la revendication 11, **caractérisée en ce qu'**un joint d'étanchéité dynamique (212) assure l'étanchéité de la chambre de pression entre l'arbre primaire (6) et le carter (174), une pièce de support (210) pouvant servir de liaison entre le joint d'étanchéité dynamique (212) et le carter (174).

13. Transmission selon la revendication 11, **caractérisée en ce que** l'alésage de l'arbre primaire (6) comporte un moyen de fermeture (216) pour l'appui d'un ressort (186).

14. Transmission selon l'une quelconque des revendications précédentes, **caractérisée en ce que** le piston (152) est moulé en matière plastique.

15. Transmission selon l'une quelconque des revendications précédentes, **caractérisée en ce que** l'embrayage commandé par le piston (52, 152) ne comporte pas de dispositif interne de rattrapage d'usure des disques de friction (40, 136).

## Claims

1. Transmission including a dual clutch transferring the torque of an engine to two input primary shafts (4, 6) of a gearbox, each clutch including at least one friction disk (24, 40, 118, 136) connected in rotation to one of the primary shafts, that can be tightened between plates of which one (26, 42, 116, 134) is axially mobile thanks to a control mechanism, one of these control mechanisms including a piston (52, 152) guided by a cylindrical surface integrated into an axial housing of a primary shaft (6), **characterised in that** the guiding cylindrical surface is located as close as possible to the shaft's housing, this surface being directly made inside the shaft's housing or inside a body (170) inserted into the housing which end is connected to the casing (174) of the gearbox via a fastening shifted outside the housing.

2. Transmission according to the claim 1, the guiding surface being realised in a body inserted into the housing, **characterised in that** the body includes a cylindrical part for the sliding of the piston (52, 152), and a flared end forming a flange with a higher diameter than the cylindrical part, located outside the housing of the primary shaft (6) for the fixing on the casing (174).

3. Transmission according to the claim 2, **characterised in that** the flange includes, for the fixing on the casing (174), a plane radial side (200) providing the perpendicularity, a cylindrical part (202, 205) providing the centring and a supporting side for a leak-proof sealing.

4. Transmission according to the claim 2, **characterised in that** the piston (152) circumscribes a hydraulic pressure chamber, and **in that** a closing disk (178) closing the pressure chamber is tightly fixed on the casing (174), this closing disk (178) can be crimped on the casing (174).

5. Transmission according to the claim 2, **characterised in that** a sealing system (209) between the casing (174) and the primary shaft (6) closes an additional chamber surrounding the body (170), this chamber being supplied in oil via a duct (208).

6. Transmission according to the claim 2, **characterised in that** the piston (152) is pushed by a mechanical system (256), a leak-proof sealing being planned between the piston and the body (170).

7. Transmission according to the claim 6, **characterised in that** the mechanical pushing system is a rod (256) pushing the end of an axial hollow formed inside the piston (152), this hollow axially covering a major part of the guiding surface of the piston.

8. Transmission according to the claim 6, **characterised in that** a hinged lever (250) on the casing (174) and transferring a force coming from an actuator, is supported by the mechanical system (256),

9. Transmission according to the claim 2, **characterised in that** the body (170) is done by impact extrusion process of an aluminium disk, this body can be fixed to the casing (174) by crimping (206).

10. Transmission according to the claim 2, **characterised in that** the body (170) is done by moulding of a plastic material, this body can be fixed to the casing (174) by clamping (206).

11. Transmission according to the claim 1, the guiding surface being directly realised inside a housing of the shaft, **characterised in that** the piston (152) slides in a bore formed by this housing and circumscribes a hydraulic pressure chamber.

12. Transmission according to the claim 11, **characterised in that** a dynamic leak-proof gasket (212) provides the sealing of the pressure chamber between the primary shaft (6) and the casing (174), a supporting part (210) can connect the dynamic leak-proof gasket (212) to the casing (174).

13. Transmission according to the claim 11, **characterised in that** the bore of the primary shaft (6) includes a closing system (216) for the support of a spring (186).

14. Transmission according to any of the previous claims, **characterised in that** the piston (152) is moulded in plastic material.

15. Transmission according to any of the previous claims, **characterised in that** the clutch controlled by the piston (52, 152) does not include any internal device for the wear adjustment of the friction disks (40, 136).

## Patentansprüche

1. Getriebe mit doppelter Kupplung, das das Drehmoment eines Motors mit zwei in ein Getriebegehäuse hineinlaufende Primärwellen (4, 6) überträgt, wobei jede Kupplung über mindestens eine drehfest mit einer der Primärwellen verbundenen Friktionsscheibe (24, 40, 118. 136) verfügt, die zwischen Platten eingespannt werden kann, von denen eine (26, 42, 116, 134) sich durch einen Antrieb axial bewegt. Einer dieser Antriebe weist einen Kolben (52, 152) auf, der über eine in eine axiale Lagerung einer Primärwelle (6) eingebaute Zylinderfläche geführt wird, und kennzeichnet sich **dadurch**, dass sich die zylindrische Führungsfläche so nah wie möglich an dem Wellenlager befindet. Diese Fläche ist im Wellenlager direkt oder in einem Körper (170) im Lager ausgeführt, dessen Ende durch eine außen am Lager angebrachte Befestigung mit dem Getriebegehäuse (174) verbunden ist.

2. Getriebe nach Anspruch 1, wobei die Führungsfläche in einem Körper im Lager eingesetzt ist. Dabei enthält der Körper einen Zylinder, der den Kolben führt (52, 152), und einen Kragenring mit einem größeren Durchmesser als der zylindrische Teil, der außerhalb des Primärwellenlagers (6) auf dem Gehäuse (174) befestigt ist.

3. Getriebe nach Anspruch 2, **gekennzeichnet dadurch, dass** der Kragenring zur Befestigung auf dem Gehäuse (174) eine flache, radiale Seite (200) aufweist, die die Rechtwinkligkeit gewährleistet. Ebenso einen zylindrischen Teil (202, 205), der die Zentrierung gewährleistet, und eine Auflagefläche für eine Dichtung.

4. Getriebe nach Anspruch 2, **gekennzeichnet dadurch, dass** der Kolben (152) eine hydraulische Druckkammer begrenzt und dass eine die Druckkammer abschließende Dichtungsscheibe (178) abdichtend auf dem Gehäuse (174) befestigt ist; diese Dichtungsscheibe (178) kann auf dem Gehäuse (174) eingepresst sein.

5. Getriebe nach Anspruch 2, **gekennzeichnet dadurch, dass** ein Dichtungsmittel (209) zwischen dem Gehäuse (174) und der Primärwelle (6) einen zusätzlichen Raum um den Körper (170) abdichtet; dieser Raum wird über eine Leitung (208) mit Öl gespeist.

6. Getriebe nach Anspruch 2, **gekennzeichnet dadurch, dass** der Kolben (152) mechanisch (256) angetrieben wird und eine Abdichtung zwischen dem Kolben und dem Körper (170) vorgesehen ist.

7. Getriebe nach Anspruch 6, **gekennzeichnet dadurch, dass** es sich bei der Antriebsmechanik um einen Schaft (256) handelt, der von einer axialen Vertiefung im Kolben (152) heraus diesen antreibt; diese Aushöhlung nimmt in axialer Richtung den größen Teil der Führungsfläche des Kolbens ein.

8. Getriebe nach Anspruch 6, **gekennzeichnet dadurch, dass** ein Gelenkhebel (250) auf dem Gehäuse (174) die Kraft eines Krafterzeugers mechanisch überträgt (256).

9. Getriebe nach Anspruch 2, **gekennzeichnet dadurch, dass** der Körper (170) aus gepresstem Aluminium hergestellt ist und an das Gehäuse (174) angebördelt (206) sein kann.

10. Getriebe nach Anspruch 2, **gekennzeichnet dadurch, dass** der Körper (170) aus Kunststoff besteht und an das Gehäuse (174) angeklemmt sein kann (206).

11. Getriebe nach Anspruch 1, **gekennzeichnet dadurch, dass** die Führungsfläche direkt in einem Wellenlager ausgeführt ist, der Kolben (152) in einer von diesem Lager gebildeten Bohrung gleitet und einen hydraulischen Druckraum begrenzt.

12. Getriebe nach Anspruch 11, **gekennzeichnet dadurch, dass** eine dynamische Dichtung (212) den Druckraum zwischen der Primärwelle (6) und dem Gehäuse (174) abdichtet; eine Stütze (210) kann dabei als Verbindung zwischen der dynamischen Dichtung (212) und dem Gehäuse (174) dienen.

13. Getriebe nach Anspruch 11, **gekennzeichnet dadurch, dass** die Bohrung der Primärwelle (6) mit Hilfe einer Feder (186) geschlossen werden kann (216).

14. Getriebe nach einem der vorhergehenden Ansprüche, **gekennzeichnet dadurch, dass** der Kolben (152) aus Kunststoff besteht.

15. Getriebe nach einem der vorhergehenden Ansprüche, **gekennzeichnet dadurch, dass** die per Kolben (52, 152) gesteuerte Kupplung keine interne Nachstelleinrichtung für den Verschleiß der Friktionsscheiben (40, 136) aufweist.
